# FASCICULE DE BREVET EUROPEEN

(11) **EP 3 573 345 B1**
(45) Date de publication et mention de la délivrance du brevet: **26.05.2021**
(21) Numéro de dépôt: 19174944.9
(22) Date de dépôt: 16.05.2019
(51) Int. Cl.: H04R 1/08, H04M 3/56, H04R 3/00

(54) **OBJET CONNECTÉ DOTÉ D'UN MOYEN DE COMMUNICATION RADIO ET D'UN MICROPHONE EMBARQUÉ SE POSANT SELON AU MOINS DEUX POSITIONS STABLES**
VERBUNDENES OBJEKT, DAS MIT EINEM FUNKKOMMUNIKATIONSMITTEL UND EINEM BORDMIKROFON VERSEHEN IST, DAS IN MINDESTENS ZWEI STABILEN POSITIONEN PLATZIERT WERDEN KANN
CONNECTED OBJECT PROVIDED WITH A RADIO COMMUNICATION MEANS AND AN ON-BOARD MICROPHONE THAT CAN BE PLACED IN AT LEAST TWO STABLE POSITIONS

(30) Priorité: 25.05.2018 FR 1854474
(43) Date de publication de la demande: 27.11.2019
(73) Titulaire: 4MOD Technology, 44300 Nantes (FR)
(72) Inventeur: STEPHAN, Laurent, 44100 NANTES (FR); GUIEU, Pauline, 44000 NANTES (FR); HAMOT, Jonathan, 44000 NANTES (FR)
(74) Mandataire: Vidon Brevets & Stratégie

(56) Documents cités:
- EP-A1- 2 757 765
- WO-A2-2014/062389
- DE-A1-102013 203 798

## Description

### 1. DOMAINE DE L'INVENTION

Le domaine de l'invention est celui des audioconférences et des appareils capables de capter du son lors d'échanges à distance entre plusieurs personnes ou à destination d'un ordinateur voire d'une intelligence artificielle. Plus précisément, l'invention concerne le fait que le microphone captant le son ambiant est un appareil mobile se posant sur une surface selon au moins deux positions, l'une des positions coupant la communication radio.

### 2. ARRIÈRE-PLAN TECHNOLOGIQUE

De nos jours, de nombreux échanges entre personnes distantes s'effectuent en vocal, par le téléphone par exemple. Lors d'audioconférence, les interlocuteurs disposent d'un matériel pour capter le son ambiant, et dans le cas de vidéoconférence, de caméras pour prendre des vidéos des lieux. Ces modes de communication sont privilégiées par rapport aux messageries textuelles car elles sont plus rapides et assurent un meilleur échange d'information en terme d'interactivité. Ces échanges s'effectuent par exemple autour de tables et de chaises placées dans chaque lieu d'audioconférence. Les interlocuteurs s'assoient autour de la table avec au moins un microphone posé dessus, et des haut-parleurs reproduisent dans le local les sons des interlocuteurs distants. De tels équipements pour audioconférence sont fabriqués par de grandes sociétés, on peut notamment citer les modèles d'appareils suivants : Google Home, Amazon Echo, Apple HomePod, Sonos One. Eventuellement, l'équipement audio est complété avec des dispositifs vidéo qui sont par exemple une ou plusieurs caméras dans chaque lieu, et un écran ou un vidéoprojecteur projetant des images sur une surface blanche.

A un certain moment de la conférence, les interlocuteurs peuvent décider de couper le son au niveau d'au moins un des lieux. Par exemple, au cours d'une procédure orale avec l'Office Européen des Brevets en visioconférence, la Division d'Examen désire délibérer et inhibe l'acquisition du son dans la salle où se trouvent les membres de la Division. Dans le cas d'une vidéoconférence, la coupure du son n'interrompt pas le flux vidéo, de sorte que les personnes se voient toujours, mais ne peuvent plus entendre ce qui se dit à distance. Le mode de coupure du son est déclenché par une action volontaire au niveau de l'équipement d'audioconférence, dans ce mode un élément visuel (un voyant d'une couleur particulière par exemple) est affiché.

Le matériel d'audioconférence comporte généralement des microphones déportés communiquant avec l'unité centrale assurant la liaison à distance soit par un fil, soit par une liaison sans contact, très généralement par radio. Dans le cas d'une liaison sans contact, le microphone déporté dispose de sa propre alimentation, soit à l'aide de piles ou d'une batterie, soit en se branchant sur le secteur. Dans certains cas, le boitier supportant le microphone comporte également des hauts parleurs, la liaison avec l'unité centrale est alors bidirectionnelle. Les microphones déportés appelé quelquefois « microphone mains libres » présentent l'avantage de pouvoir facilement se placer devant les interlocuteurs, ce qui améliore l'acquisition du son. Cette proximité avec les interlocuteurs a incité les constructeurs à les équiper d'une interface utilisateur permettant d'agir sur la capture du son et/ou d'afficher une indication sur le mode de fonctionnement du microphone. Typiquement, un bouton poussoir, généralement repéré par l'indication « Secret », est disposé sur le microphone pour couper le son dans une certaine position, et un voyant lumineux indique si le microphone est alimenté et si l'acquisition du son est coupée.

La présence d'un bouton augmente le coût de fabrication du microphone. De plus, la position « Secret » du bouton n'est pas toujours facilement visualisable, surtout si c'est un bouton poussoir. Pour résoudre ce problème, les constructeurs ajoute un voyant lumineux pour prévenir que le microphone est en mode normal ou « Secret », ce qui augmente le coût.

Il est donc préférable de prévoir un autre moyen pour activer et désactiver le mode « secret » qui ne présente pas les inconvénients de l'art antérieur.

EP2757765A1 décrit un système d'audioconférence comprenant des microphones radio, des microphones à fil, des haut-parleurs, le tout étant relié à une station de base communiquant avec un réseau. Les signaux sonores sont traités par un filtre adaptatif afin de supprimer les échos. La station de base reçoit une information de mouvement des microphones et les signaux sonores et modifie les paramètres de filtrage afin d'éviter d'éventuels échos.

DE102013203798A1 décrit un dispositif de communication mobile, avec une unité de batterie, au moins un microphone pour enregistrer un signal audio, un convertisseur de lecture pour lire un signal audio, un capteur de proximité ou un capteur tactile pour détecter une approche du capteur de proximité ou toucher un capteur tactile et/ou un capteur de détection de rotation pour détecter une rotation ou un mouvement du microphone et/ou du transducteur de lecture, et une unité d'inhibition pour interrompre la détection du signal audio par le microphone et/ou la lecture du signal audio par le convertisseur de lecture lorsque le capteur de proximité a détecté une approche ou lorsque le capteur tactile a détecté un contact ou lorsque le capteur de détection de rotation a détecté une rotation.

WO2014/062389A2 décrit un dispositif de communication pour acquérir un son et le transmettre à d'autres utilisateurs. Le dispositif comporte une base recouverte d'un capot, un panneau de commande qui peut être amovible, un écran tactile, des microphones et une pluralité de haut-parleurs sonores, placés sous le capot. Des bagues lumineuses informent les utilisateurs de l'état du dispositif.

### 3. EXPOSÉ DE L'INVENTION

Dans un mode de réalisation particulier de l'invention, il est proposé un système d'acquisition du son selon la revendication 1.

Selon un autre aspect, il est également proposé un procédé selon la revendication 11.

Selon un premier mode de réalisation, la première position laisse visible l'ouïe d'entrée des signaux sonores et en ce que la seconde position rend invisible ladite ouïe d'entrée. De cette manière, l'utilisateur se rend facilement compte quelle est la position coupant le son.

Selon un autre mode de réalisation l'objet est de forme sensiblement cylindrique et doté de deux bases sensiblement circulaire, l'ouverture du microphone étant placé sur une des deux bases, la pose de l'objet sur la base où se situe le microphone désactivant au moins la communication radio. De cette manière, l'objet ne comporte que deux positions stables, chacune des deux positions étant parfaitement identifiables par la position du microphone.

Selon un autre mode de réalisation, l'objet connecté comporte un moyen d'émission d'un signal lumineux lorsque ledit objet est positionné selon la première position. De cette manière, l'utilisateur est informé que le moyen de communication du son est actif et que l'on peut entendre ce qui se dit autour de l'objet.

Selon un autre mode de réalisation, l'objet connecté comporte un moyen d'émission d'un signal lumineux lorsque ledit objet est positionné selon la seconde position. De cette manière, l'utilisateur est informé que le moyen de communication du son est coupé et que l'on ne peut pas entendre ce qui se dit autour de l'objet.

Selon un autre mode de réalisation, l'objet connecté comporte un détecteur de mouvement, le moyen de communication radio (15) émettant une information indiquant que l'objet est actuellement en mouvement. De cette manière, l'appareil recevant les signaux radio est informé que l'objet est manipulé et qu'il va peut-être changé de position.

Selon un autre mode de réalisation, l'information transmise est représentative du mouvement appliqué à l'objet. De cette manière, en utilisant le même capteur pour détecter la position, il est aussi possible d'introduire des commandes à l'aide du mouvement appliqué à l'objet, et ainsi le configurer selon certains modes.

Selon un autre mode de réalisation, l'objet connecté comporte une pluralité de microphones permettant l'acquisition du son selon des directions différentes. De cette manière, la qualité du son est améliorée.

Selon un autre mode de réalisation, l'objet connecté est conçu pour fonctionner dans un environnement comportant plusieurs objets dotés de microphones, les données émises par le moyen de communication radio étant associées à un identifiant de l'objet émettant lesdites données. De cette manière, il est possible de définir des flux de données sonores et ainsi d'améliorer la restitution spatiale du son.

Selon un autre mode de réalisation, l'objet connecté comporte un détecteur de position pour déterminer la position de l'objet, ledit détecteur étant constitué d'un ou plusieurs équipements parmi la liste d'équipements suivants :
- bouton poussoir,
- capteur inertiel,
- relais de type REED,
- gyroscope,
- détecteurs de luminosité.

De cette manière, l'objet connecté est facile à réaliser, et à moindre coût.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 présente une vue en perspective d'un microphone connecté dans une position où la communication radio est activée, selon un exemple de réalisation,
- la figure 2 présente une vue en perspective du même exemple de microphone connecté dans une position où la communication radio est désactivée,
- la figure 3 présente un schéma des différents composants du microphone connecté selon un exemple de réalisation,
- la figure 4 représente un exemple d'ordinogramme des principales étapes permettant de commuter de mode pour activer et désactiver la liaison radio,
- la figure 5 illustre d'autres formes de microphones connectés dotés de positions pour lesquelles l'acquisition du son et sa transmission sont désactivées.

### 5. DESCRIPTION DÉTAILLÉE D'UN MODE DE REALISATION

Sur toutes les figures du présent document, les éléments (ou les étapes) identiques sont désignées par une même référence numérique.

### 5.1 Principe général

Il est proposé un microphone connecté doté de moyens de communication radio pour l'émission de données représentant des signaux sonores captés par un microphone embarqué dans ledit objet. La forme de cet objet autorise de le poser sur un plan selon au moins deux positions stables, une première position de l'objet où le moyen de communication radio est actif, et une seconde position de l'objet désactivant au moins le moyen de communication radio.

### 5.2 Description du matériel

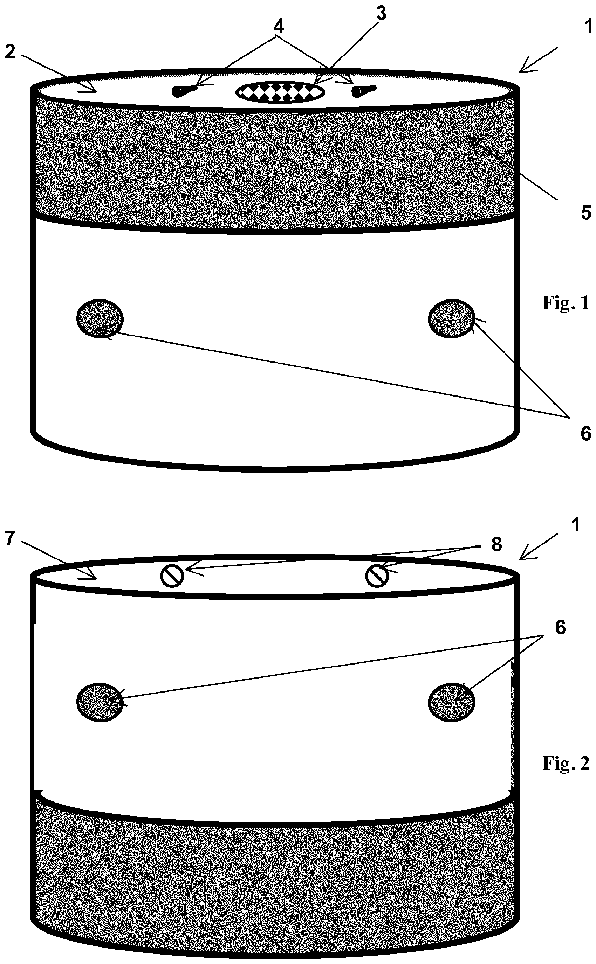

On présente maintenant, en relation avec la Fig. 1, un exemple de vue en perspective d'un microphone connecté dans une position autorisant l'acquisition et la transmission du son capté. Le microphone connecté 1 peut s'utiliser habituellement en relation avec une unité centrale assurant la liaison à distance soit par un fil, soit par une liaison sans contact, très généralement par radio. Dans le cas d'une liaison sans contact, qui est celui décrit dans la suite du document, le microphone déporté dispose de sa propre alimentation. Selon cet exemple de réalisation, le microphone connecté 1 possède une forme cylindrique dotée de deux faces circulaires entourées par une surface de révolution. Naturellement, un tel objet est posé sur l'une ou l'autre face, tout autre position n'étant pas stable. Tel que représenté sur la **Fig.1****,** le microphone connecté est posé sur une face qui est en contact avec une surface servant de support, une table par exemple, l'autre face 2 est alors visible. L'ouïe d'entrée 3 des signaux sonores captés par le microphone, généralement protégée par une grille, est avantageusement placée sur la face 2, la visibilité de cette ouïe constitue une première indication pour signaler dans quelle position se trouve le microphone, cette position étant celle où les signaux sonores sont acquis et transmis à l'unité centrale. D'autres indications visuelles 4 peuvent être apposées sous la forme d'une sérigraphie imprimée sur la face 2, montrant par exemple un dessin de microphone. Selon une variante, des indications peuvent également apparaître sur la surface de révolution à proximité de la face 2, comme par exemple un bandeau de couleur 5.

Ces indications visuelles ont pour but de distinguer une première position où la communication radio avec l'unité centrale est activée, et une seconde position où la communication radio est désactivée.

De façon optionnelle, un ou plusieurs voyants lumineux 6 sont disposés sur la surface de révolution. Ces voyants peuvent être de type LED, ou cristaux liquides rétro-éclairés ou pas, ou par déplacement d'une petit pièce mécanique de couleur, ... ou tout autre moyen d'affichage. L'état de la liaison radio est indiqué par celui des voyants lumineux, par exemple si les voyants sont allumés, les signaux sonores sont acquis et transmis à l'unité centrale, s'ils sont éteints, le microphone est en mode « secret ». Selon un perfectionnement, lorsque les voyants s'allument un court instant (un flash toutes les 5 secondes par exemple), cela signifie que la batterie est déchargée et que, sans intervention, le microphone ne sera bientôt plus opérationnel. On peut utiliser l'indication fournie par les voyants selon un autre mode de fonctionnement, par exemple le fait qu'en mode « Secret », les voyants 6 sont allumés.

La **Fig. 2** représente un exemple de vue en perspective d'un microphone connecté dans une position où la communication radio est désactivée, et où le microphone 1 est en mode secret. Le microphone illustré par la Fig.1 a subi une rotation de 180° et la face 2 supportant l'ouïe d'entrée des signaux sonores est maintenant en contact avec la table et de ce fait, invisible. La face 7 opposée à la face 2 est maintenant visible. Des indications visuelles 8 peuvent être apposées sous la forme d'une sérigraphie imprimée sur la face 7, montrant par exemple un dessin d'arrêt. Des indications également présentes sur la surface de révolution à proximité de la face 2, comme par exemple un bandeau de couleur 5, indique aussi visuellement que les signaux sonores ne sont plus acquis et transmis à l'unité centrale. La différence d'aspect entre les deux positions est suffisamment nette pour renseigner immédiatement si le microphone est en mode « Secret». Si des voyants 6 sont présents, ils sont de préférence éteints dans cette position.

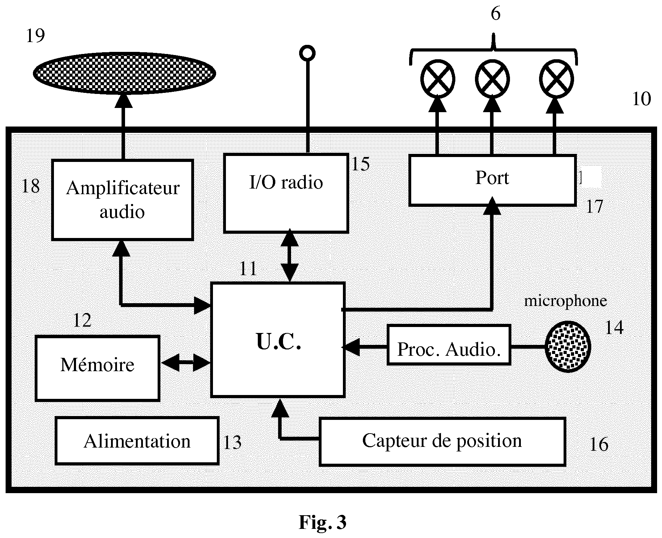

La **Fig. 3** présente un schéma des différents composants électroniques équipant le microphone connecté selon un exemple de réalisation. Le microphone connecté comporte une carte électronique 10 sur laquelle les principaux composants sont regroupés. Cette carte comporte typiquement un contrôleur 11 associé à une mémoire 12 de programme et de données, et un module d'alimentation 13. Ce module d'alimentation est de préférence une pile ou une batterie, mais peut aussi être un connecteur reliant un fil d'alimentation fournissant de l'énergie d'un chargeur. Dans le cas d'une batterie, sa recharge peut s'effectuer en recevant de l'énergie par ondes électromagnétiques émises par un chargeur à induction ou de toute autre moyen de fourniture d'énergie.

La carte 10 comporte un élément de capture du son 14 placé au fond de l'ouïe 3, les signaux sonores ainsi captés de façon analogique sont convertis en données numériques par un processeur audio qui les transmet ensuite au contrôleur 11. La carte 10 comporte en outre un circuit d'interface radio 15 pour émettre des signaux vers l'unité centrale. Ce circuit permet des liaisons sans fil à courte portée (en s'appuyant par exemple sur la norme WIFI, bluetooth, NFC, Beacon, ...). L'alimentation de ce circuit est commandée par le contrôleur 11 et permet de l'activer et de le désactiver. La carte dispose d'au moins un capteur 16 pour déterminer la position du microphone connecté dans l'espace et ses mouvements. Ces capteurs 16 sont de préférence pris dans l'ensemble suivant :
- capteur inertiel,
- relais de type REED,
- gyroscope,
- détecteurs de luminosité
- bouton poussoir monostable orienté vers la base de l'objet,
- actionneur de type Bille actionné par la gravité et commutateur.

Le détecteur de luminosité est avantageusement placé sur la face 2 de l'objet. Si ce détecteur est recouvert (dans la position « Secret » par exemple), il ne reçoit aucune lumière et cet état est révélateur de la position de l'objet. Si au contraire, la lumière atteint ce capteur, cela signifie qu'il n'est pas masqué et que l'objet est dans une position où les signaux sonores ne sont plus acquis et transmis à l'unité centrale. Ce mode de réalisation est particulièrement avantageux lorsque l'on veut placé en mode « Secret » un court instant le microphone, il suffit alors de poser son doigt sur le capteur et le maintenir tant que l'on veut garder le mode « Secret ».

Les capteurs sont avant tout destinés à détecter une position stable du microphone connecté 1. Ces capteurs peuvent avantageusement servir à détecter aussi des mouvements dans l'espace. Ces mouvements sont alors comparés à un modèle numérique et par analogie peuvent être associés à un geste précis et à une commande. Le mouvement appliqué au microphone permet notamment de l'éteindre complètement, et de le rallumer.

Selon un perfectionnement, la commande correspond à ce mouvement est émise sous la forme d'un code par le circuit d'interface radio 15 à destination de l'unité centrale. Au début d'une audioconférence, un opérateur active l'unité centrale et la place dans un mode d'acquisition de flux audio provenant des microphones. En appliquant successivement un mouvement particulier à chaque microphone mis en service, ceux-ci émettent leurs identifiants et l'unité centrale peut ainsi identifier les flux provenant de plusieurs microphones disposés dans une salle et constituer un flux de sortie vers les interlocuteurs distants

Selon un exemple de réalisation, lorsque l'unité centrale reçoit une information d'un microphone représentatif d'un mouvement, elle émet un signal sonore et/ou lumineux. De cette manière, les utilisateurs peuvent savoir que le mouvement appliqué sur ce microphone a été pris en compte par l'unité centrale.

Dans le cas d'une installation avec de nombreux microphones, l'unité centrale peut afficher sur un écran de contrôle les états et modes de fonctionnement parmi l'ensemble ci-après :
- microphone non utilisé,
- microphone en mode normal, liaison radio activé,
- microphone en mode secret, liaison radio désactivé,
- microphone en mode normal, niveau d'alimentation faible.

Toujours dans le cas d'une installation avec de nombreux microphones, lorsque l'un des microphones émet à l'unité centrale un code indiquant qu'il est passé dans le mode « Secret », cette dernière peut émettre un signal de commande aux autres microphones pour qu'ils passent également dans ce mode. Les voyants des autres microphones indiquent alors le mode « Secret », cette indication étant la seule sur ces microphones pour signaler qu'ils sont dans ce mode, car ils n'ont pas changé de position. Selon cet exemple de réalisation, la liaison radio est bidirectionnelle, et dans le mode « secret », seul l'émission des signaux est désactivé, chaque microphone étant capable de recevoir à tout moment des commandes de l'unité centrale.

De façon optionnelle, la carte 10 dispose également de ports de sortie 17 pour alimenter un ou plusieurs voyants lumineux 6 disposés sur la surface du microphone connecté 1. Le contrôleur détermine le mode de fonctionnement du microphone connecté et en déduit la commande vers les voyants, par exemple :
- éteint : mode normal, transmission des signaux sonores
- allumé en permanence : mode « Secret »
- émission de flash court : mode normal, niveau faible de l'alimentation.

Selon un perfectionnement, la carte peut disposer d'un vibreur qui est mis en marche lorsque le microphone connecté 1 est en mouvement, et s'arrête dès qu'il est stable. Ce vibreur constitue un retour haptique informant l'utilisateur que le mouvement est bien pris en compte. Cet élément haptique est une alternative aux voyants lumineux 6, et est particulièrement utile lorsque le design de l'objet ne permet pas l'implémentation de tels voyants.

Selon un perfectionnement, la carte comporte un moyen de génération de signaux sonores 18, tel qu'un amplificateur, émettant des signaux électriques vers un haut parleur 19. Le microphone peut ainsi être utilisé comme moyen d'émission sonore des signaux provenant des interlocuteurs distants, pour une meilleure audition.

Après avoir présenté les éléments constituant le microphone connecté, objet de la présente demande de brevet, nous allons maintenant expliciter comment ceux-ci coopèrent.

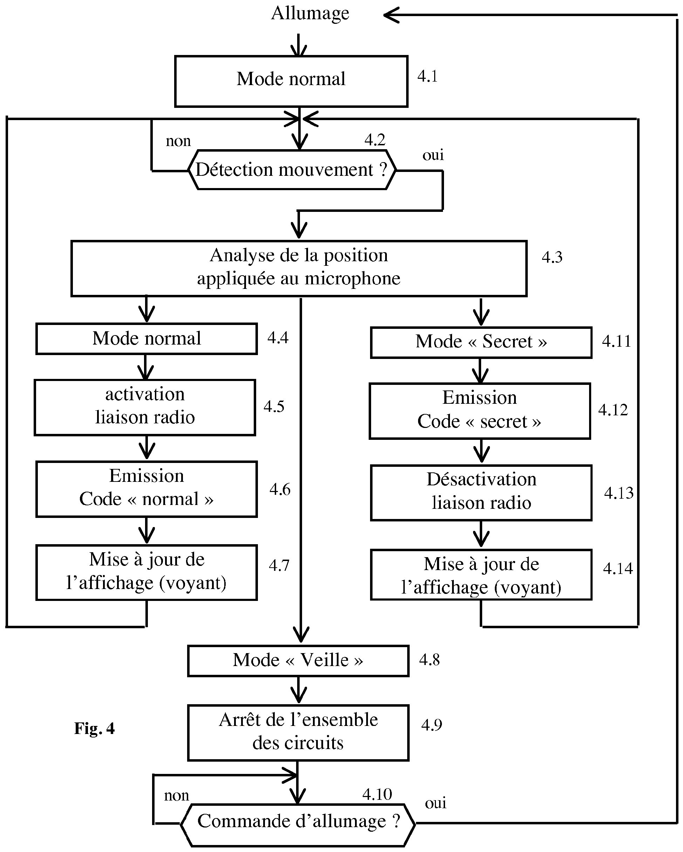

La **Fig. 4** représente un exemple d'ordinogramme des principales étapes permettant de commuter les modes pour activer et désactiver la liaison radio. A la mise en marche du microphone connecté 1 (étape 4.1), le mode par défaut est normal et la liaison radio est activée. A l'étape 4.2, le contrôleur 11 interroge les capteurs de mouvement 16 en vue de déterminer un changement de position consécutif d'un mouvement. Si c'est le cas, le contrôleur analyse à l'étape 4.3 ses capteurs pour déterminer la nouvelle position appliquée au microphone. Selon le mouvement effectué et la position atteinte, le contrôleur en déduit le mode dans lequel se situe le microphone.

Si la position résultant du déplacement place le microphone dans une position autorisant l'acquisition et la transmission du son capté, alors l'appareil est en mode normal (étape 4.4), et la liaison radio est activée pour transmettre à l'unité centrale les signaux sonores (étape 4.5). Eventuellement à l'étape 4.6, le contrôleur émet par radio un code indiquant son état. Dans ce mode, le contrôleur met à jour les moyens d'affichage de l'état du microphone en éteignant le voyant lumineux 6 (étape 4.7). Puis, le programme exécutable reboucle à l'étape 4.2 pour attendre un nouveau mouvement appliqué au microphone.

Si le mouvement appliqué au microphone indique une commande d'extinction, alors l'appareil passe en mode « veille » (étape 4.8). Le contrôleur 11 arrête alors tous les circuits qui ne sont pas utiles à la remise en marche, et quel que soit la position physique de l'appareil, place le microphone connecté dans un état de consommation électrique minimale (étape 4.9) en éteignant notamment les voyants lumineux. Le circuit de reprise de l'allumage reste actif et détecte la réception d'une éventuelle commande d'allumage (étape 4.10) qui réveillera le contrôleur et lancera l'exécution du programme. Selon un perfectionnement, si le microphone ne détecte aucun mouvement pendant une longue période (2 heures par exemple), alors il se place automatiquement en mode « veille » pour économiser sa batterie.

Si la position résultant du déplacement place le microphone en mode « Secret » (étape 4.11), alors de façon optionnelle le contrôleur émet par radio un donnée informant que le microphone 1 est en mode « Secret » (étape 4.12). Puis, à l'étape 4.13 le contrôleur désactive le circuit d'interface radio 15 pour ne plus transmettre de signaux sonores vers l'unité centrale. Dans ce mode, le contrôleur allume le voyant lumineux 6 (étape 4.14). Puis, le programme exécutable reboucle à l'étape 4.2 pour attendre un nouveau mouvement appliqué au microphone.

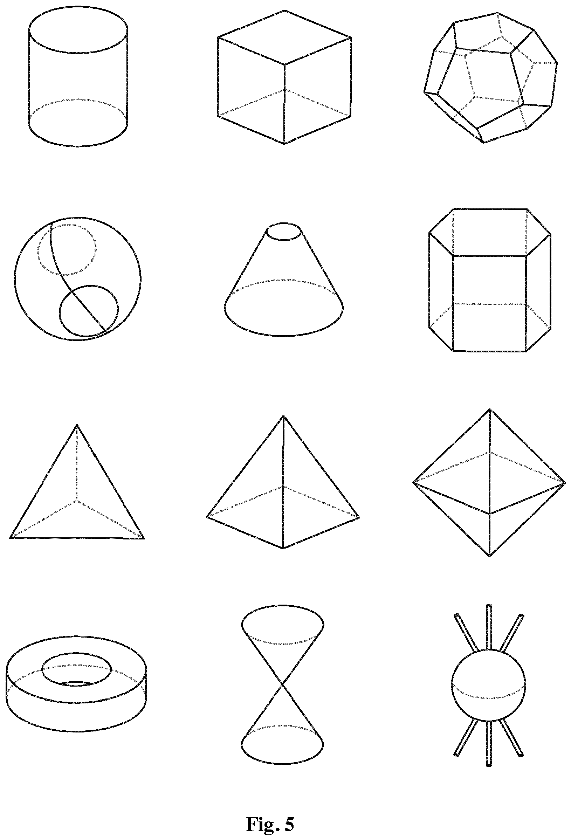

La **Fig. 5** présente plusieurs autres formes de microphones connectés dotés de plusieurs positions stables. La forme cubique (seconde forme sur la ligne du haut, seconde position) procure 6 positions stables, et la forme prismatique à six cotés (troisième forme sur la seconde ligne) autorise 8 positions stables. Chaque position définie par la surface plane sur laquelle le microphone est posé, est configurée selon que l'acquisition du son et sa transmission sont ou non désactivées.

En fonction du mode de réalisation choisi, certains actes, actions, événements ou fonctions peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou événements sont effectués ou se produisent concurremment et non pas successivement.

Bien que décrits à travers un certain nombre d'exemples de réalisation détaillés, les dispositifs correspondants comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

## Revendications

1. Système d'acquisition du son comprenant une pluralité d'objets connectés (1),
chaque objet connecté (1) de ladite pluralité comportant un moyen d'émission radio (15) configuré pour l'émission de données représentant des signaux sonores captés par un microphone (14) embarqué dans ledit objet connecté et un contrôleur (11) recevant des signaux d'au moins un capteur de position (16),
chaque objet connecté (1) de ladite pluralité possédant une forme autorisant de le poser sur un plan selon au moins deux positions stables, le contrôleur étant adapté pour émettre un signal d'activation du moyen d'émission radio lorsque le capteur (16) détecte une première position dudit objet connecté, et le contrôleur étant adapté pour émettre un signal de désactivation du moyen d'émission radio (15) lorsque le capteur (16) détecte une seconde position dudit objet connecté,
caractérisé en ce le moyen d'émission radio de chaque objet connecté est également configuré pour l'émission, lorsque le capteur détecte la seconde position dudit objet connecté, d'une première donnée d'état informant que ledit objet connecté est positionné dans la seconde position,
et en ce que chaque objet connecté comprend des moyens de réception (15) d'une deuxième donnée d'état informant qu'un autre objet connecté de ladite pluralité est positionné dans la seconde position, la réception de ladite deuxième donnée d'état déclenchant l'émission par le contrôleur dudit objet connecté d'un signal de désactivation du moyen d'émission radio dudit objet connecté.

2. Système d'acquisition selon la revendication 1, dans lequel chaque objet connecté comporte une ouïe d'entrée des signaux sonores, la première position laissant visible ladite ouïe d'entrée (3) des signaux sonores et la seconde position rendant invisible ladite ouïe d'entrée.

3. Système d'acquisition selon la revendication 1 ou 2, dans lequel chaque objet connecté (1) est de forme sensiblement cylindrique et doté de deux bases sensiblement circulaires et comporte une ouverture du microphone (14) qui est placée sur une des deux bases, la pose de l'objet connecté sur la base où se situe le microphone déclenchant l'émission d'un signal de désactivation d'au moins le moyen d'émission radio (15).

4. Système d'acquisition selon l'une quelconque des revendications précédentes, dans lequel chaque objet connecté comporte un moyen d'émission (6) d'un signal lumineux lorsque ledit objet connecté est positionné selon la première position.

5. Système d'acquisition selon l'une quelconque des revendications précédentes, dans lequel chaque objet connecté comporte un moyen d'émission (6) d'un signal lumineux lorsque ledit objet connecté est positionné selon la seconde position.

6. Système d'acquisition selon l'une quelconque des revendications précédentes, dans lequel chaque objet connecté comporte un détecteur de mouvement, le moyen d'émission radio (15) émettant une information indiquant que l'objet est actuellement en mouvement.

7. Système d'acquisition selon la revendication 6, dans lequel l'information émise est représentative du mouvement appliqué à l'objet connecté.

8. Système d'acquisition selon l'une quelconque des revendications précédentes, dans lequel chaque objet connecté comporte une pluralité de microphones permettant l'acquisition du son selon des directions différentes.

9. Système d'acquisition selon l'une quelconque des revendications précédentes, dans lequel les données émises par le moyen d'émission radio sont associées à un identifiant de l'objet connecté émettant lesdites données.

10. Système d'acquisition selon l'une quelconque des revendications précédentes, dans lequel ledit capteur de position (16) est constitué d'un ou plusieurs équipements parmi la liste d'équipements suivants :
- bouton poussoir,
- capteur inertiel,
- relais de type REED,
- gyroscope,
- détecteurs de luminosité.

11. Procédé mis en œuvre dans un système d'acquisition du son selon l'une quelconque des revendications 1 à 10, comprenant une pluralité d'objets connectés (1), **caractérisé en ce qu'**il comprend les étapes suivantes :
- le moyen d'émission radio d'un des objets connectés de ladite pluralité émet une donnée d'état informant que ledit objet connecté est positionné dans la seconde position ; et
- sur réception de ladite donnée d'état, chaque autre objet connecté de ladite pluralité désactive son moyen d'émission radio.

## Patentansprüche

1. System zur Tonaufzeichnung mit einer Mehrzahl von verbundenen Objekten (1), wobei jedes verbundene Objekt (1) aus der Mehrzahl ein Funksendemittel (15) aufweist, das dazu eingerichtet ist, um Daten auszusenden, die akustische Signale darstellen, die durch ein in dem verbundenen Objekt befindliches Mikrofon (14) erfasst werden, und einen Controller (11), der Signale von mindestens einem Positionssensor (16) empfängt,
wobei jedes verbundene Objekt (1) aus der Mehrzahl eine Form aufweist, die es ermöglicht, es auf eine Ebene gemäß mindestens zwei stabilen Positionen zu platzieren, wobei der Controller geeignet ist, ein Signal zur Aktivierung des Funksendemittels zu senden, wenn der Sensor (16) eine erste Position des verbundenen Objekts erfasst, und wobei der Controller geeignet ist, ein Signal zur Deaktivierung des Funksendemittels (15) zu senden, wenn der Sensor (16) eine zweite Position des verbundenen Objekts erfasst,
**dadurch gekennzeichnet, dass** das Funksendemittel des jeweiligen verbundenen Objekts ferner eingerichtet ist, um ein erstes Zustandsdatum, das darüber informiert, dass das verbundene Objekt in der zweiten Position positioniert ist, zu senden, wenn der Sensor die zweite Position des verbundenen Objekts erfasst,
und dass jedes verbundene Objekt Mittel (15) für den Empfang eines zweiten Zustandsdatums umfasst, das darüber informiert, dass ein weiteres verbundenes Objekt aus der Mehrzahl in der zweiten Position positioniert ist, wobei der Empfang des zweiten Zustandsdatums das Senden eines Deaktivierungssignals für das Funksendemittel des verbundenen Objekts durch den Controller des verbundenen Objekts auslöst.

2. Aufzeichnungssystem nach Anspruch 1, bei dem jedes verbundene Objekt eine Eingangsöffnung für die akustischen Signale aufweist, wobei die erste Position die Eingangsöffnung (3) der akustischen Signale sichtbar lässt und die zweite Position die Eingangsöffnung unsichtbar macht.

3. Aufzeichnungssystem nach Anspruch 1 oder 2, bei dem jedes verbundene Objekt (1) im Wesentlichen zylindrisch ausgebildet ist und mit zwei im Wesentlichen kreisförmigen Grundflächen versehen ist und eine Öffnung des Mikrofons (14) aufweist, die auf einer der zwei Grundflächen angeordnet ist, wobei das Platzieren des verbundenen Objekts auf die Grundfläche, auf der das Mikrofon befindlich ist, das Senden eines Signals zur Deaktivierung zumindest des Funksendemittels (15) auslöst.

4. Aufzeichnungssystem nach einem beliebigen der vorhergehenden Ansprüche, bei dem jedes verbundene Objekt ein Mittel (6) zum Senden eines Lichtsignals aufweist, wenn das verbundene Objekt gemäß der ersten Position positioniert ist.

5. Aufzeichnungssystem nach einem beliebigen der vorhergehenden Ansprüche, bei dem jedes verbundene Objekt ein Mittel (6) zum Senden eines Lichtsignals aufweist, wenn das verbundene Objekt gemäß der zweiten Position positioniert ist.

6. Aufzeichnungssystem nach einem beliebigen der vorhergehenden Ansprüche, bei dem jedes verbundene Objekt einen Bewegungssensor aufweist, wobei das Funksendemittel (15) eine Information sendet, wonach das Objekt sich aktuell bewegt.

7. Aufzeichnungssystem nach Anspruch 6, bei dem die gesendete Information repräsentativ für die auf das verbundene Objekt angewendete Bewegung ist.

8. Aufzeichnungssystem nach einem beliebigen der vorhergehenden Ansprüche, bei dem jedes verbundene Objekt eine Mehrzahl von Mikrofonen aufweist, welche die Tonaufzeichnung gemäß unterschiedlichen Richtungen ermöglichen.

9. Aufzeichnungssystem nach einem beliebigen der vorhergehenden Ansprüche, bei dem die von dem Funksendemittel gesendeten Daten einer Kennung des die Daten sendenden verbundenen Objekts zugeordnet sind.

10. Aufzeichnungssystem nach einem beliebigen der vorhergehenden Ansprüche, bei dem der Positionssensor (16) aus einer oder mehreren Vorrichtungen aus der Liste folgender Vorrichtungen besteht:
- Taster,
- Trägheitssensor,
- Relais vom Typ REED,
- Gyroskop,
- Helligkeitssensoren.

11. Verfahren, das in einem System zur Tonaufzeichnung mit einer Mehrzahl von verbundenen Objekten (1) nach einem beliebigen der Ansprüche 1 bis 10 ausgeführt wird, **dadurch gekennzeichnet, dass** es die folgenden Schritte umfasst:
- das Funksendemittel eines der verbundenen Objekte aus der Vielzahl sendet ein Zustandsdatum, das darüber informiert, dass das verbundene Objekt in der zweiten Position positioniert ist, und
- bei Empfang des Zustandsdatums deaktiviert jedes weitere verbundene Objekt aus der Mehrzahl sein Funksendemittel.

## Claims

1. A sound acquisition system comprising a plurality of connected objects (1),
each connected object (1) of said plurality including a radio emitting means (15) configured for the emission of data representing sound signals captured by a microphone (14) embedded in said connected object and a controller (11) receiving signals from at least one position sensor (16),
each connected object (1) of said plurality having a shape allowing to set it on a plane according to at least two stable positions, the controller being adapted to emit a signal for activating the radio emitting means when the sensor (16) detects a first position of said connected object, and the controller being adapted to emit a signal for deactivating the radio emitting means (15) when the sensor (16) detects a second position of said connected object,
**characterized in that** the radio emitting means of each connected object is also configured for the emission, when the sensor detects the second position of said connected object, of a first state datum informing that said connected object is positioned in the second position,
and **in that** each connected object comprises means for receiving (15) a second state datum informing that another connected object of said plurality is positioned in the second position, the reception of said second state datum triggering the emission by the controller of said connected object of a signal for deactivating the radio emitting means of said connected object.

2. The acquisition system according to claim 1, wherein each connected object includes a sound signals audition port, the first position leaving said sound signals audition port (3) visible and the second position rendering said audition port invisible.

3. The acquisition system according to claim 1 or 2, wherein each connected object (1) has a substantially cylindrical shape and two substantially circular bases and includes an opening of the microphone (14) which is placed on one of the two bases, setting the connected object on the base where the microphone is located triggering the emission of a signal for deactivating at least the radio emitting means (15).

4. The acquisition system according to any one of the preceding claims, wherein each connected object includes a means for emitting (6) a light signal when said connected object is positioned according to the first position.

5. The acquisition system according to any one of the preceding claims, wherein each connected object includes a means for emitting (6) a light signal when said connected object is positioned according to the second position.

6. The acquisition system according to any one of the preceding claims, wherein each connected object includes a motion detector, the radio emitting means (15) emitting information indicating that the object is currently moving.

7. The acquisition system according to claim 6, wherein the emitted information is representative of the motion imparted to the connected object.

8. The acquisition system according to any one of the preceding claims, wherein each connected object includes a plurality of microphones enabling sound acquisition according to different directions.

9. The acquisition system according to any one of the preceding claims, wherein the data emitted by the radio emitting means are associated to an identifier of the connected object emitting said data.

10. The acquisition system according to any one of the preceding claims, wherein said position sensor (16) is constituted by one or several items of equipment from the following equipment list:
- pushbutton,
- inertial sensor,
- REED-type relay,
- gyroscope,
- brightness detectors.

11. A method implemented in a sound acquisition system according to any one of claims 1 to 10, comprising a plurality of connected objects (1), **characterized in that** it comprises the following steps:
- the radio emitting means of one of the connected objects of said plurality emits a state datum informing that said connected object is positioned in the second position; and
- on reception of said state datum, each other connected object of said plurality deactivates its radio emitting means.
